# EUROPÄISCHE PATENTSCHRIFT

(11) **EP 2 757 166 B1**
(45) Veröffentlichungstag und Bekanntmachung des Hinweises auf die Patenterteilung: **22.08.2018**
(21) Anmeldenummer: 14151220.2
(22) Anmeldetag: 15.01.2014
(51) Int. Cl.: C22B 7/00, C22B 26/22

(54) **Verfahren und Vorrichtung zur Gewinnung von Magnesium aus magnesiumhaltigen Metallabfällen**
Method and apparatus for extracting metallic magnesium from metal waste containing magnesium
Procédé et dispositif de collecte de magnésium à partir de déchets métalliques contenant du magnésium

(30) Priorität: 17.01.2013 AT 500302013
(43) Veröffentlichungstag der Anmeldung: 23.07.2014
(73) Patentinhaber: LKR Leichtmetallkompetenzzentrum Ranshofen GmbH, 5282 Ranshofen (AT)
(72) Erfinder: Kretz, Richard, 5280 Braunau (AT); Chimani, Christian, 4540 Pfarrkirchen (AT)
(74) Vertreter: Wirnsberger, Gernot

(56) Entgegenhaltungen:
- GB-A- 569 472
- US-A- 4 478 637
- US-A- 5 476 529
- DITZE A ET AL: "DISTILLATION PROCESSES FOR MAGNESIUM WINNING AND RECYCLING//DESTILLATIONSPROZESSE ZUR GEWINNUNG VON MAGNESIUMMETALL UND ZUR AUFBEREITUNG VON MAGNESIUMSCHROTT//PROCEDES DE DISTILLATION POUR OBTENIR DU MAGNESIUM METALLIQUE ET POUR LE RECYCLAGE DE LA MITRAI", WORLD OF METALLURGY - ERZMETALL, GDMB - MEDIENVERLAG, CLAUSTHAL-ZELLERFELD, DE, Bd. 57, Nr. 5, 1. September 2004 (2004-09-01), Seiten 251-257, XP001201538, ISSN: 1613-2394

## Beschreibung

Die Erfindung betrifft ein Verfahren zur Gewinnung von Magnesium aus magnesiumhaltigen Metallabfällen, insbesondere aus Magnesiumschrott, wobei metallischer Abfall erwärmt wird, um Magnesium durch Verdampfen und/oder Sublimieren in eine Gasphase überzuführen, wonach aus der Gasphase Magnesium abgeschieden wird, wobei das Magnesium aus der Gasphase als flüssige Phase abgeschieden wird, wobei der Abfall in einem ersten Bereich erwärmt wird und die daraus entstehende Gasphase über einen zweiten Bereich in einen dritten Bereich geführt wird, in dem Magnesium flüssig abgeschieden wird.
Des Weiteren betrifft die Erfindung eine Vorrichtung zur Gewinnung von Magnesium aus magnesiumhaltigen Metallabfällen, insbesondere aus Magnesiumschrott, laut Anspruch 11. Bedingt durch seine geringe Dichte hat sich Magnesium zu einem wichtigen Leichtbauwerkstoff entwickelt, mit steigender Bedeutung beim Bau von energiesparenden Fahrzeugen wie Hybrid- und Elektrofahrzeugen und bei Zweirädern. Auch in elektronischen Geräten wie Mobiltelefonen, Kameras, Taschencomputer oder dergleichen werden bereits Teile aus Magnesium verbaut. Trotz der Kurzlebigkeit insbesondere von elektronischen Geräten ist ein Rezyklieren, also das organisierte Wiedereinbringen des Magnesiums in einen Herstellungsprozess von neuen Magnesiumteilen, nicht so gut organisiert, wie das bei anderen Metallen, z. B. Aluminium, bereits der Fall ist.
Aufgrund der stabilen Bindung von Magnesium an seine Begleitelemente in den Rohstoffen sind zur Gewinnung von 1 kg des Leichtmetalls zurzeit etwa 35 kWh an Energie erforderlich. Zum Aufschmelzen von 1 kg metallischem Magnesium werden hingegen nur ca. 1 bis 2 kWh benötigt. Dieser große Unterschied im Energiebedarf verdeutlicht die Bedeutung des Recyclings von magnesiumhaltigen Reststoffen. Recycling schont die Ressourcen und ermöglicht ein nachhaltiges Wirtschaften.

Gegenwärtig kommen verschiedene Verfahren zum Rezyklieren von Magnesiumreststoffen im industriellen Maßstab infrage. Primär werden Magnesiumreststoffe durch Umschmelzen mit oder ohne Flussmittel rezykliert. Bei einem flussmittelfreien Umschmelzen werden die Verunreinigungen durch Zugabe von Gasen entfernt. Eine Schutzgasatmosphäre verhindert dabei ein Oxidieren des Magnesiums, das mit Sauerstoff besonders rasch und heftig reagieren kann, insbesondere wenn das Magnesium in flüssiger Phase vorliegt.

Beim flussmittelfreien Umschmelzverfahren bleiben Legierungselemente, die mit den Flussmitteln Salze bilden würden, erhalten. Diese Methode eignet sich daher nur für hochwertige oder geringfügig verunreinigte Abfälle. Im Gegensatz dazu ermöglichen flussmittelbasierte Umschmelzmethoden eine Rezyklierung von Abfällen unabhängig von deren Zusammensetzung, wobei allerdings eine Vorbehandlung, z. B. eine Reinigung, erforderlich sein kann. Durch die Zugabe von Reinigungs- und Abdecksalzen werden Verunreinigungen entfernt und die Schmelze wird wiederum vor Oxidation geschützt. Allerdings weist auch diese Methodik Nachteile auf. So können Salzeinschlüsse im Metall später zu einer Korrosion desselben führen.

Eine alternative Methodik besteht darin, Magnesiumabfälle zu reinigen, indem die Abfälle aufgeschmolzen und in die Gasphase überführt werden, wonach aus der Gasphase festes Magnesium abgeschieden wird. Möglich ist dabei auch, das Magnesium aus den Magnesiumabfällen zu sublimieren und so die für die spätere Abscheidung von festem Magnesium erforderliche Gasphase zu bilden. Ein derartiger Ansatz ist Gegenstand eines Artikels von R. Kretz et al., BHM Berg- und Hüttenmännische Monatshefte 2011 (156) 242. Bei dieser Methodik bzw. bei diesem Verfahren werden viele der Nachteile der zuvor erwähnten Umschmelzverfahren vermieden. Allerdings haften auch diesem Verfahren Nachteile an: Zum einen führt die Abscheidung des metallischen Magnesiums in fester Form zu einer fraktalen-dendritischen Struktur mit einem sehr hohen Verhältnis einer Oberfläche zu einem Volumen, was bei Kontakt mit Luft eine rasche Oxidation des Magnesiums zur Folge hat. Daraus ergeben sich Massen- und Energieverluste. Zum anderen sind aufgrund der Präsenz von Oxiden im abgeschiedenen Magnesium weitere Prozessschritte erforderlich, um ein oxidfreies Halbzeug für die Weiterverarbeitung zu gewinnen.

Dokument GB 569,472 A beschreibt eine Vorrichtung und ein Verfahren zur kontinuierlichen Produktion von Magnesium in flüssiger Phase ausgehend von magnesiumoxidhaltigen Ausgangsstoffen. Das Magnesium aus den Ausgangsstoffen wird verdampft und anschließend aus der Gasphase an Kondenserflächen abgeschieden und das flüssige Magnesium in ein Auffangbecken abgetropft.

In Dokument US 5,476,529 A ist ein Verfahren zur Gewinnung von Magnesium aus magnesiumhaltigen Schrott offenbart. Der magnesiumhaltige Schrott wird in einem elektrischen Ofen aufgeheizt und durch Zugabe von Flussmitteln aufbereitet und das Magnesium verdampft und wieder kondensiert. Elemente mit geringerer Volatilität als Magnesium werden in einem unteren Bereich des Ofens aufbereitet.

Dokument US 4,478,637 A beschreibt die Gewinnung von Magnesium, indem magnesiumhaltiges Material in einer Reaktionszone mit einem Reduktionsmittel umfassend Ferrosilicium und Aluminium behandelt wird, um Magnesiumdampf zu erzeugen. Der Magnesiumdampf wird anschießend in der Kondensationszone kondensiert und gesammelt.

In der Publikation: A. Ditze et al.: Distillation Processes for Magnesium Winning and Recycling; World of Metallurgy - Erzmetall, Bd. 57, Nr. 5 (2004) wird ein Überblick über verschiedene Destillationsverfahren gegeben, welche darauf basieren, dass Magnesiumoxide mit Ferrosilicium und Aluminium reduziert werden, um anschließend das Magnesium durch Kondensation wieder in die feste Phase abzuscheiden. Die Verfahren werden bezüglich ihrer Effektivität und Destillationsraten gegenübergestellt und Auslegungen für Anlagen vorgeschlagen.

Aufgabe der Erfindung ist es, ein Verfahren der eingangs genannten Art derart weiterzubilden, dass ein kompaktes, im Wesentlichen oxidfreies Halbzeug aus rezykliertem Magnesium unter Minimierung der aufzuwendenden Energie gewinnbar ist.

Des Weiteren ist es Aufgabe der Erfindung, eine Vorrichtung zur Durchführung eines derartigen Verfahrens anzugeben.

Die verfahrensmäßige Aufgabe wird erfindungsgemäß gelöst, wenn bei einem Verfahren der eingangs genannten Art die beim Abscheiden der flüssigen Phase freiwerdende Energie zur Vorerwärmung des Magnesiums im Prozess oder zur Heizung einer Vorrichtung zur Durchführung des Verfahrens genutzt wird.

Ein mit einem erfindungsgemäßen Verfahren erzielter Vorteil ist insbesondere darin zu sehen, dass aufgrund der Abscheidung des Magnesiums in flüssiger Form anschließend ein kompaktes Halbzeug mit einem geringen Verhältnis von Oberfläche zu Volumen erhalten wird. Da die Oberfläche des rezykliertem Magnesiums minimiert ist, ist auch ein Oxidanteil an der Oberfläche minimiert und darüber hinaus die Gefahr einer unkontrollierten Oxidation und damit eines Abbrennens des Magnesiums verringert. Da gleichzeitig die beim Abscheiden des Magnesiums freiwerdende Energie genutzt wird, insbesondere zur Vorerwärmung des Magnesiums im Prozess oder zur Heizung der Vorrichtung zur Durchführung des Verfahrens, ist die zur Verfahrensdurchführung aufzuwendende Energie minimiert.

Das erfindungsgemäße Verfahren wird zweckmäßigerweise so durchgeführt, dass beim Erwärmen und Abscheiden ein reduzierter Druck eingestellt wird. Durch die Einstellung eines reduzierten Drucks während der Verfahrensführung können die erforderlichen Temperaturen und damit ein Energieeintrag reduziert werden. Der Druck kann auf 10⁻⁴ bis 10⁻¹ bar, insbesondere 10⁻³ bis 10⁻² bar, eingestellt werden. Bei einem Vakuum von 10⁻³ bar verdampft Magnesium aus dem flüssigen Zustand bei etwa 600 °C, wohingegen bei Normaldruck eine Temperatur von etwa 1100 °C erforderlich ist.

Erfindungsgemäß ist vorgesehen, dass der Abfall in einem ersten Bereich erwärmt wird und die daraus entstehende Gasphase über einen zweiten Bereich in einen dritten Bereich geführt wird, in dem Magnesium flüssig abgeschieden wird. Durch die Aufteilung in verschiedene Bereiche mit unterschiedlichem Temperaturprofil kann das Verfahren mit den einzelnen Phasenübergängen gezielt gesteuert und bezüglich eines Energieeintrags optimiert werden. Dabei werden der erste Bereich auf einer ersten Temperatur, der zweite Bereich auf einer zweiten Temperatur und der dritte Bereich auf einer dritten Temperatur gehalten, wobei die zweite Temperatur höher als die übrigen Temperaturen und die erste Temperatur unterhalb der dritten Temperatur gehalten wird. Dies ermöglicht es insbesondere, bei reduziertem Druck von beispielsweise 10⁻³ bar im ersten Bereich das Magnesium aus dem Abfall in die Gasphase zu bringen, im zweiten Bereich bei einer vergleichsweise hohen Temperatur abzuziehen und danach einem dritten Bereich zuzuführen, in welchem das Magnesium als flüssige Phase abgeschieden wird. Die erste Temperatur kann hierfür in einem Bereich von 500 °C bis 650 °C eingestellt werden, die zweite Temperatur auf mehr als 800 °C und die dritte Temperatur in einem Bereich von 650 °C bis 850 °C.

Die Abscheidung des Magnesiums erfolgt an einem Kondensator bzw. einer Kühleinrichtung. Der Kondensator wird hierfür thermisch geregelt gekühlt. Beispielsweise kann der Kondensator durch eine Kühlmittelbeaufschlagung im Inneren desselben konstant auf einer Temperatur von 700 °C gehalten werden. Wenn der Kondensator mit einem Kühlmedium beaufschlagt wird, wird eine Abwärme des Kühlmediums vorzugsweise zur Vorerwärmung des Abfalls und/oder zum Beheizen einer Vorrichtung zur Durchführung des Verfahrens eingesetzt. Damit kann ein Teil jener Energie, die erforderlich ist, um das Magnesium in die Gasphase zu bringen, auf einfache Weise wieder rückgewonnen und im Verfahren eingesetzt werden. Dadurch verbessert sich die Energiebilanz des Verfahrens.
Die weitere Aufgabe wird erfindungsgemäß gelöst, wenn die erste Kammer und die zweite Kammer durch einen vorzugsweise verjüngten Verbindungsbereich miteinander verbunden sind, wobei die freiwerdende Energie zur Vorerwärmung des Magnesiums im Prozess oder zur Heizung der Vorrichtung genutzt wird. Mit einer erfindungsgemäßen Vorrichtung kann auf besonders einfache Weise hochreines Magnesium in kompakter Weise gewonnen werden, das sich exzellent als Halbzeug zur weiteren Verarbeitung für Teile aus Magnesium oder Magnesiumlegierungen eignet. Durch die vorgesehenen unterschiedlichen Kammern kann ein Verfahren zur Abtrennung von Magnesium über die Gasphase in einzelnen Bereichen exakt gesteuert werden, was einer hohen Reinheit des abgeschiedenen Magnesiums sowie einer Oxidfreiheit desselben zugutekommt. Des Weiteren ist aufgrund der vorgesehenen Einrichtung zur Rückgewinnung der beim Abscheiden freiwerdenden Umwandlungsenergie ein Energieeintrag bei der Durchführung des Verfahrens minimiert.

Die erfindungsgemäße Vorrichtung weist zumindest eine Heizeinrichtung zum Beheizen der ersten Kammer und/oder der zweiten Kammer auf. Es ist günstig, wenn zwei gesonderte Heizeinrichtungen zum Beheizen jeder einzelnen Kammer vorgesehen sind. Die Heizeinrichtungen können jeweils mit einem Sensor sowie einer Regelung ausgestattet sein, sodass sowohl in der ersten Kammer als auch in der zweiten Kammer eine Temperatur in einem engen Temperaturfenster von beispielsweise ±10 °C einstellbar ist.

In der zweiten Kammer ist eine Kühleinrichtung angeordnet. Die Kühleinrichtung ist bevorzugt kopfseitig positioniert, sodass das Magnesium dort zunächst als flüssige Phase kondensieren kann und anschließend in einen tieferen Bereich der zweiten Kammer abtropft. Von dort kann das Magnesium diskontinuierlich entnommen werden. Möglich ist es auch, beispielsweise über ein Schleusensystem, das flüssige Magnesium aus der zweiten Kammer abzuziehen und in einer weiteren Kammer verfestigen zu lassen.

Die erste Kammer und die zweite Kammer sind erfindungsgemäß durch einen Verbindungsbereich miteinander verbunden, wobei der Verbindungsbereich verjüngt ausgeführt sein kann. Eine verjüngte Ausbildung des Verbindungsbereiches ist ausreichend, da über diesen lediglich die Gasphase in die zweite Kammer zu bringen ist. Eine Trennung der ersten Kammer von der zweiten Kammer durch den Verbindungsbereich ist jedoch günstig, da im Verbindungsbereich die Temperatur dann gesondert eingestellt und geregelt werden kann.

Günstig ist es des Weiteren, wenn zumindest eine Vakuumeinrichtung vorgesehen ist, mit welcher die erste Kammer und die zweite Kammer evakuierbar sind. Dadurch kann das Verfahren bei erniedrigtem Druck und damit auch bei erniedrigten Temperaturen durchgeführt werden.

Weitere Merkmale, Vorteile und Wirkungen der Erfindung ergeben sich aus dem nachfolgend dargestellten Ausführungsbeispiel. In den Zeichnungen, auf welche dabei Bezug genommen wird, zeigen:
Fig. 1 eine erfindungsgemäße Vorrichtung;
Fig. 2 ein Phasendiagramm.

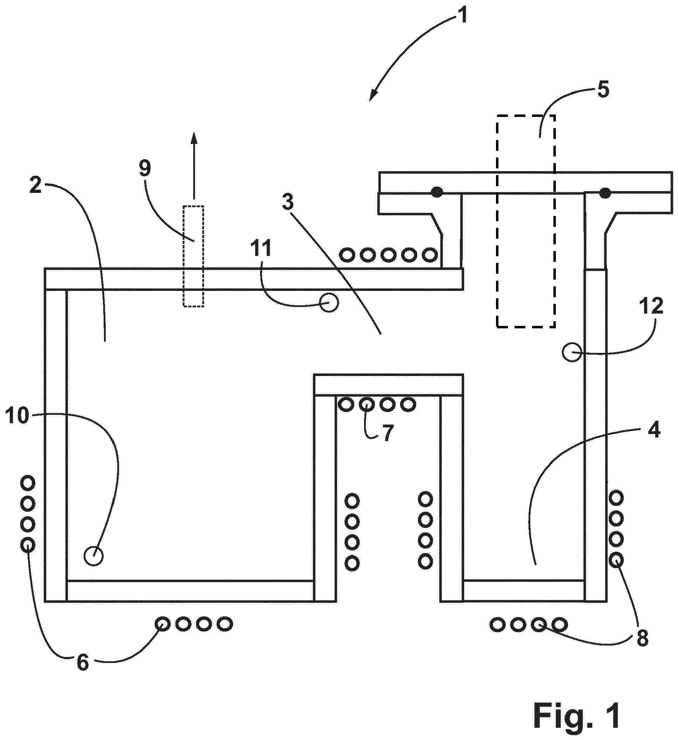

In Fig. 1 ist eine erfindungsgemäße Vorrichtung 1 dargestellt. Die Vorrichtung 1 weist eine erste Kammer 2 sowie eine zweite Kammer 4 auf, die durch einen Verbindungsbereich 3 miteinander in Verbindung stehen. Die erste Kammer 2 ist mit dem größten Volumen ausgebildet und dient der Aufnahme von Magnesiumschrott. Der Verbindungsbereich 3 schließt an einer Kopfseite an die erste Kammer 2 an und mündet in die zweite Kammer 4. Wie angedeutet, sind mehrere Heizeinrichtungen 6, 7, 8 vorgesehen, mit welchen die erste Kammer 2, der Verbindungsbereich 3 und die zweite Kammer 4 jeweils gesondert beheizbar sind, um gewünschte Temperaturen in jedem der einzelnen Bereiche einzustellen. Für eine entsprechende Regelung sind zusätzlich Thermoelemente 10, 11, 12 oder andere Sensoren vorgesehen, die jeweils mit einer Regeleinrichtung in Verbindung stehen, sodass die Temperaturen wie erwähnt in jedem der einzelnen Bereiche exakt einstellbar sind. In der zweiten Kammer 4 ist darüber hinaus kopfseitig eine Kühleinrichtung 5 angeordnet, die im Inneren mit einem Kühlmittel beaufschlagbar ist. Dadurch kann an der Kühleinrichtung 5 eine Temperatur wunschgemäß eingestellt werden. Im Übrigen ist die Vorrichtung 1 an sich nach außen hin grundsätzlich abgeschlossen, weist aber zusätzlich eine Vakuumeinrichtung 9 auf, mit welcher die gesamte Vorrichtung 1 evakuiert werden kann, sodass ein gewünschter Druck einstellbar ist. Üblicherweise liegt der Druck im Bereich von 10⁻⁴ bis 10⁻¹ bar, insbesondere im Bereich von 10⁻² bis 10⁻³ bar. Im Zusammenhang mit der Kühleinrichtung 5 kann die Vorrichtung 1 noch weitere externe Komponenten enthalten, insbesondere um eine Energieeffizienz im Zusammenhang mit dem durch die Kühleinrichtung 5 geführten Kühlmittel weiter zu verbessern. Die Kühleinrichtung 5, die beispielsweise als Wärmerohr oder sogenannter Thermosyphon ausgebildet sein kann, kann z. B. mit einer Einrichtung zur Erzeugung elektrischer Energie, insbesondere einem Generator in Verbindung stehen. Dadurch ist es möglich, die durch eine Verflüssigung des abgeschiedenen Magnesiums freiwerdende Energie gesondert zu nutzen und beispielsweise die erste Kammer 2 oder die zweite Kammer 4 zu beheizen.

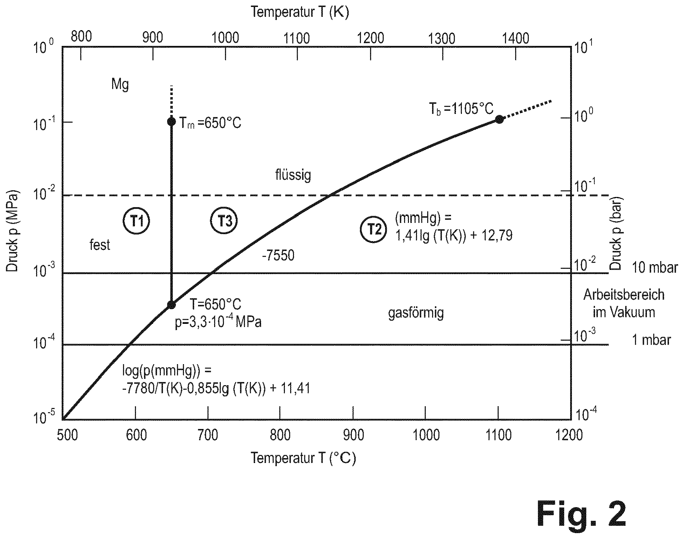

Die Vorrichtung 1 eignet sich zur Durchführung eines erfindungsgemäßen Verfahrens, das mit Blick auf Fig. 2 wie folgt abläuft: In die erste Kammer 2 wird Magnesiumschrott eingebracht, aus dem möglichst reines Magnesium gewonnen werden soll. Anschließend wird die Vorrichtung 1 auf einen Druck von etwa 10⁻³ bis 10⁻² bar evakuiert. Dadurch ist es möglich, wie aus Fig. 2 ersichtlich ist, einen Phasenübergang fest-gasförmig bei einer Temperatur von etwa 600 °C bis 650 °C zu erreichen. Sofern die Temperatur etwas höher ist, kann auch ein Übergang von einer flüssigen in eine gasförmige Phase erfolgen. Um einen entsprechenden Phasenübergang zu ermöglichen und damit das Magnesium aus dem Magnesiumschrott abzuziehen, wird die erste Kammer auf eine erste Temperatur T1 gebracht. Im Verbindungsbereich 3 wird eine zweite Temperatur T2 eingestellt, die beispielsweise 900 °C betragen kann. In der zweiten Kammer 4 wird eine dritte Temperatur T3 eingestellt, die unterhalb der zweiten Temperatur T2 liegt. Die dritte Temperatur T3 ist jedoch so hoch, dass entsprechend dem Phasendiagramm gemäß Fig. 2 bei dem gegebenen Druck an der Kühleinrichtung 5 ein Übergang des Magnesiums von der gasförmigen in die flüssige Phase erfolgen kann. Somit wird das Magnesium in der ersten Kammer 2 in einen gasförmigen Zustand gebracht, über den kopfseitig anschließenden Verbindungsbereich 3 als Gasphase in die zweite Kammer 4 geführt und dort aus der Gasphase an der Kühleinrichtung 5 als flüssige Phase abgeschieden. Das so abgeschiedene Magnesium sammelt sich am Boden der zweiten Kammer 4 und kann dort je nach Verfahrensführung diskontinuierlich oder kontinuierlich abgezogen werden. Sofern ein kontinuierliches Abziehen gewünscht ist, weist die zweite Kammer 4 beispielsweise bodenseitig oder knapp über dem Boden einen Auslass auf, über welchen das flüssige Magnesium abfließen kann, um einer weiteren Kammer zugeführt zu werden, in welcher eine Verfestigung erfolgt. Bei einer kontinuierlichen Verfahrensführung ist darüber hinaus ein Schleusensystem an der ersten Kammer 2 vorzusehen, damit diese zur kontinuierlichen Prozessführung bedarfsweise gefüllt werden kann, ohne den unter vermindertem Druck geführten Prozess zu stören.

Ein erfindungsgemäßes Verfahren erlaubt die Abscheidung von Magnesium zunächst vollständig in flüssiger Phase und danach die Bildung von kompakten Halbzeugen aus Magnesium mit einem niedrigen Verhältnis von Oberfläche zu Volumen. Darüber hinaus kann das Magnesium auch mit einer geringen Porosität abgeschieden werden, was in der Folge ein Aufschmelzen des Halbzeuges in weiteren Verfahrensschritten bei der Herstellung neuer Teile aus rezykliertem Magnesium wesentlich erleichtert.

## Patentansprüche

1. Verfahren zur Gewinnung von Magnesium aus magnesiumhaltigen Metallabfällen, insbesondere aus Magnesiumschrott, wobei metallischer Abfall erwärmt wird, um Magnesium durch Verdampfen und/oder Sublimieren in eine Gasphase überzuführen, wonach aus der Gasphase Magnesium abgeschieden wird, wobei das Magnesium aus der Gasphase als flüssige Phase abgeschieden wird, wobei der Abfall in einem ersten Bereich erwärmt wird und die daraus entstehende Gasphase über einen zweiten Bereich in einen dritten Bereich geführt wird, in dem Magnesium flüssig abgeschieden wird, **dadurch gekennzeichnet, dass** die beim Abscheiden der flüssigen Phase freiwerdende Energie zur Vorerwärmung des Magnesiums im Prozess oder zur Heizung einer Vorrichtung (1) zur Durchführung des Verfahrens genutzt wird.

2. Verfahren nach Anspruch 1, **dadurch gekennzeichnet, dass** beim Erwärmen und Abscheiden ein reduzierter Druck eingestellt wird.

3. Verfahren nach Anspruch 2, **dadurch gekennzeichnet, dass** der Druck auf 10⁻⁴ bis 10⁻¹ bar, insbesondere 10⁻³ bis 10⁻² bar, eingestellt wird.

4. Verfahren nach einem der Ansprüche 1 bis 3, **dadurch gekennzeichnet, dass** der erste Bereich auf einer ersten Temperatur (T1), der zweite Bereich auf einer zweiten Temperatur (T2) und der dritte Bereich auf einer dritten Temperatur (T3) gehalten wird, wobei die zweite Temperatur (T2) höher als die übrigen Temperaturen (T1, T3) und die erste Temperatur (T1) unterhalb der dritten Temperatur (T3) gehalten wird.

5. Verfahren nach Anspruch 4, **dadurch gekennzeichnet, dass** die erste Temperatur (T1) in einem Bereich von 500 °C bis 650 °C eingestellt wird.

6. Verfahren nach Anspruch 4 oder 5, **dadurch gekennzeichnet, dass** die zweite Temperatur (T2) auf mehr als 800 °C eingestellt wird.

7. Verfahren nach einem der Ansprüche 4 bis 6, **dadurch gekennzeichnet, dass** die dritte Temperatur (T3) in einem Bereich von 650 °C bis 850 °C eingestellt wird.

8. Verfahren nach einem der Ansprüche 1 bis 7, **dadurch gekennzeichnet, dass** das Magnesium an einem Kondensator abgeschieden wird.

9. Verfahren nach Anspruch 8, **dadurch gekennzeichnet, dass** der Kondensator thermisch geregelt gekühlt wird.

10. Verfahren nach Anspruch 8 oder 9, **dadurch gekennzeichnet, dass** der Kondensator mit einem Kühlmedium beaufschlagt wird und eine Abwärme des Kühlmediums zur Vorerwärmung des Abfalls und/oder zum Beheizen einer Vorrichtung (1) zur Durchführung des Verfahrens eingesetzt wird.

11. Vorrichtung (1) zur Gewinnung von Magnesium aus magnesiumhaltigen Metallabfällen, insbesondere aus Magnesiumschrott, mit einer Kammer (2), in der metallischer Abfall erwärmbar ist, um Magnesium durch Verdampfen und/oder Sublimieren in eine Gasphase überzuführen und danach aus der Gasphase Magnesium abzuscheiden, wobei mehrere Kammern (2, 4) vorgesehen sind, wobei in einer ersten Kammer (2) Magnesium in die Gasphase bringbar ist, wobei zumindest eine Heizeinrichtung (6, 8) zum Beheizen der ersten Kammer (2) vorgesehen ist und in einer zweiten Kammer (4) Magnesium in flüssiger Phase abscheidbar ist und zumindest eine Einrichtung zur Abscheidung des Magnesiums und gleichzeitig zumindest teilweisen Umwandlung der beim Abscheiden des Magnesiums freiwerdenden Energie vorgesehen ist, wobei ein Kondensator bzw. eine Kühleinrichtung vorgesehen ist, an welcher die Abscheidung erfolgt, **dadurch gekennzeichnet, dass** die erste Kammer (2) und die zweite Kammer (4) durch einen vorzugsweise verjüngten Verbindungsbereich (3) miteinander verbunden sind, wobei die freiwerdende Energie zur Vorerwärmung des Magnesiums im Prozess oder zur Heizung der Vorrichtung (1) genutzt wird.

12. Vorrichtung (1) nach Anspruch 11, **dadurch gekennzeichnet, dass** zumindest eine Heizeinrichtung (6, 8) zum Beheizen der ersten Kammer (2) und/oder zweiten Kammer (4) vorgesehen ist.

13. Vorrichtung (1) nach Anspruch 11 oder 12, **dadurch gekennzeichnet, dass** in der zweiten Kammer (4) eine Kühleinrichtung (5) angeordnet ist.

14. Vorrichtung (1) nach einem der Ansprüche 11 bis 13, **dadurch gekennzeichnet, dass** eine Vakuumeinrichtung (9) vorgesehen ist, mit welcher die erste Kammer (2) und die zweite Kammer (4) evakuierbar sind.

## Claims

1. Process for the recovery of magnesium from magnesium-containing metal waste, particularly magnesium scrap, wherein metal waste is heated to transform magnesium into a gas phase by evaporation and/or sublimation, after which magnesium is precipitated from the gas phase, wherein the magnesium is precipitated from the gas phase as a liquid phase, wherein the waste is heated in a first region and the gas phase arising therefrom is passed through a second region and into a third region in which magnesium is precipitated in the liquid phase, **characterized in that** the energy released during precipitation of the liquid phase is used to heat a device (1) for carrying out the process.

2. Process according to claim 1, **characterized in that** a reduced pressure is set during heating and precipitation.

3. Process according to claim 2, **characterized in that** the pressure is set in a range from 10⁻⁴ to 10⁻¹, particularly from 10⁻³ to 10⁻² bar.

4. Process according to any one of claims 1 to 3, **characterized in that** the first region is maintained at a first temperature (T1), the second region is maintained at a second temperature (T2), and the third region is maintained at a third temperature (T3), wherein the second temperature (T2) is maintained higher than the other temperatures (T1, T3) and the first temperature (T1) is maintained lower than the third temperature (T3).

5. Process according to claim 4, **characterized in that** the first temperature (T1) is set in a range from 500 °C to 650 °.

6. Process according to claim 4 or 5, **characterized in that** the second temperature (T2) is set to above 800 °C.

7. Process according to any one of claims 4 to 6, **characterized in that** the third temperature (T3) is set in a range from 650 °C to 850 °C.

8. Process according to any one of claims 1 to 7, **characterized in that** the magnesium is precipitated on a condenser.

9. Process according to claim 8, **characterized in that** the condenser is cooled in thermally regulated manner.

10. Process according to claim 8 or 9, **characterized in that** the condenser is exposed to a cooling medium, and a waste heat of the cooling medium is used for preheating the waste and/or for heating a device (1) for carrying out the process.

11. Device (1) for the recovery of magnesium from magnesium-containing metal waste, particularly magnesium scrap, having a chamber (2) in which metal waste can be heated to transform magnesium into a gas phase by evaporation and/or sublimation and then to precipitate magnesium from the gas phase, wherein multiple chambers (2, 4) are provided, wherein the magnesium can be brought into the gas phase in the a first chamber (2), wherein at least one heating device (6, 8) is provided for heating the first chamber (2) and magnesium can be precipitated as a liquid phase in a second chamber (4), and at least one device is provided for precipitating the magnesium and simultaneously converting at least a part of the energy released during precipitation of the magnesium, wherein a condenser or cooling apparatus is provided, on which the precipitation takes place, **characterized in that** the first chamber (2) and the second chamber (4) are connected to each other via a preferably tapering connecting region (3), wherein the energy released is used to preheat the magnesium in the process or to heat the device (1).

12. Device (1) according to claim 11, **characterized in that** at least one heating device (6, 8) is provided for heating the first chamber (2) and/or the second chamber (4).

13. Device (1) according to claim 11 or 12, **characterized in that** a cooling device (5) is arranged inside the second chamber (4).

14. Device (1) according to any one of claims 11 to 13, **characterized in that** a vacuum device (9) is provided, with which the first chamber (2) and the second chamber (4) can be evacuated.

## Revendications

1. Procédé de production de magnésium à partir de déchets métalliques contenant du magnésium, en particulier à partir de débris de magnésium, dans lequel les déchets métalliques sont chauffés pour transformer le magnésium par évaporation et/ou sublimation en une phase gazeuse, après quoi du magnésium est séparé de la phase gazeuse, le magnésium étant séparé de la phase gazeuse sous forme de phase liquide, les déchets étant réchauffés dans une première plage et la phase gazeuse en résultant étant passée d'une deuxième plage à une troisième plage dans laquelle le magnésium est séparé en liquide, **caractérisé en ce que** l'énergie libérée lors de la séparation de la phase liquide est utilisée pour préchauffer le magnésium dans le processus ou pour chauffer un dispositif (1) de réalisation du procédé.

2. Procédé selon la revendication 1, **caractérisé en ce qu'**une pression réduite est réglée lors du réchauffage et de la séparation.

3. Procédé selon la revendication 2, **caractérisé en ce que** la pression est réglée à 10⁻⁴ à 10⁻¹ bars, en particulier 10⁻³ à 10⁻² bars.

4. Procédé selon une des revendications 1 à 3, **caractérisé en ce que** la première plage est maintenue à une première température (T1), la deuxième plage à une deuxième température (T2) et la troisième plage à une troisième température (T3), la deuxième température (T2) étant supérieure aux autres températures (T1, T3) et la première température (T1) étant maintenue en dessous de la troisième température (T3) .

5. Procédé selon la revendication 4, **caractérisé en ce que** la première température (T1) est réglée dans une plage de 500 °C à 650 °C.

6. Procédé selon la revendication 4 ou 5, **caractérisé en ce que** la deuxième température (T2) est réglée à plus de 800 °C.

7. Procédé selon une des revendications 4 à 6, **caractérisé en ce que** la troisième température (T3) est réglée dans une plage de 600 °C à 850 °C.

8. Procédé selon une des revendications 1 à 7, **caractérisé en ce que** le magnésium est séparé dans un condensateur.

9. Procédé selon la revendication 8, **caractérisé en ce que** le condensateur est refroidi avec une régulation thermique.

10. Procédé selon la revendication 8 ou 9, **caractérisé en ce que** le condensateur est sollicité avec un fluide de refroidissement et qu'une chaleur dégagée par le fluide de refroidissement est utilisée pour préchauffer les déchets et/ou pour chauffer un dispositif (1) de réalisation du procédé.

11. Dispositif (1) de production de magnésium à partir de déchets métalliques contenant du magnésium, en particulier à partir de débris de magnésium, comportant une chambre (2) dans laquelle les déchets métalliques peuvent être chauffés pour passer le magnésium par évaporation et/ou sublimation en phase gazeuse et pour séparer ensuite le magnésium de la phase gazeuse, plusieurs chambres (2, 4) étant prévues, sachant que, dans une première chambre (2), le magnésium peut être amené en phase gazeuse, étant prévu au moins un dispositif de chauffage (6, 8) pour chauffer la première chambre (2) et du magnésium en phase liquide pouvant être séparé dans une seconde chambre (4) et étant prévu au moins un dispositif de séparation du magnésium et en même temps de transformation au moins partielle de l'énergie libérée lors de la séparation de la phase liquide, étant prévu un condensateur ou un dispositif de refroidissement où a lieu la séparation, **caractérisé en ce que** la première chambre (2) et la deuxième chambre (4) sont reliées entre elles par une zone de liaison (3) de préférence rétrécie, l'énergie libérée étant utilisée pour préchauffer le magnésium dans le processus ou pour chauffer le dispositif (1).

12. Dispositif (1) selon la revendication 11, **caractérisé en ce que** l'au moins un dispositif de chauffage (6, 8) est prévu pour chauffer la première chambre (2) et/ou la seconde chambre (4).

13. Dispositif (1) selon la revendication 11 ou 12, **caractérisé en ce qu'**un dispositif de refroidissement (5) est disposé dans la seconde chambre (4).

14. Dispositif (1) selon une des revendications 11 à 13, **caractérisé en ce qu'**il est prévu un dispositif de mise sous vide (9) qui permet d'évacuer l'air de la première chambre (2) et de la seconde chambre (4).
